# EUROPEAN PATENT APPLICATION

(11) **EP 4 184 482 A1**
(43) Date of publication of application: **24.05.2023**
(21) Application number: 22207813.1
(22) Date of filing: 16.11.2022
(51) Int. Cl.: G08G 5/00, B64C 39/02, B60L 53/16, B64F 1/00, G08B 13/18

(54) **SAFETY AND MONITORING SYSTEM AND AIRCRAFT DEVICE WITH REMOTE PILOT ASSOCIATED THERETO**

(30) Priority: 22.11.2021 IT 202100029402
(71) Applicant: Bufo, Michele, 95131 Catania (CT) (IT); Mazzi, Fabrizio, 91100 Trapani (TP) (IT); Passalacqua, Remo, 91100 Trapani (TP) (IT); Revelles Gonzalez, Maria, 56128 Pisa (PI) (IT)
(72) Inventor: Bufo, Michele, 95131 Catania (CT) (IT); Mazzi, Fabrizio, 91100 Trapani (TP) (IT); Passalacqua, Remo, 91100 Trapani (TP) (IT); Revelles Gonzalez, Maria, 56128 Pisa (PI) (IT)
(74) Representative: Fiammenghi, Eva

(57) **Abstract**

Safety and monitoring system and associated aircraft device with remote pilot for airport monitoring and safety, comprising:
- a maneuvering area;
- a plurality of landing and stop platforms connected to a monitoring station by means of a wireless network and/or sim;
- an aircraft device with remote pilot provided with a recognition cell, a telescopic trolley for charging, a first camera and a second 360° camera; it detects intrusions, visually engages people and objects, following them and instantly transmitting information to the monitoring station;
- a central monitoring controller installed in the monitoring station, comprising a screen, adapted to send a landing and/or take-off command;
said maneuvering area being divided into at least three safety zones provided with fences, video cameras and perimeter security sensors, a geo-localization device.

## Description

### Field of the invention

The present invention relates to the field of safety systems in airport facilities. More in detail, the subject of this patent application is a new monitoring system and an aircraft device with remote pilot that allow assistance, monitoring of the progress of the activities of an airport, location of aircraft fleets and the identification of threats for the safety.

### Prior art

In the prior art, a variety of remotely piloted aircraft are known, commonly known as drones, flying devices characterized by the absence of the pilot on board. Controlled by a computer on board the aircraft or via the remote control of a navigator or pilot, on the ground or in other positions, at first they were used exclusively in the military field and then spread, later in the consumer universe, up to the business world. The number of drones used for the most varied purposes is progressively growing. By making it possible to carry out activities at sustainable costs that only up to a few years ago would have involved unsustainable expenses, drones are contributing to that Digital Transformation that distinguishes Industry 4.0. In short, if the companies of the so-called "fourth industrial revolution" are increasingly smart and innovative, this is also due to the drones.

The diffusion of drones for commercial purposes by the major companies of the globe is also due to the legislative provisions recently approved in the United States. Last June, the Federal Aviation Administration issued an act according to which the use of drones for commercial purposes is allowed to anyone with a certification obtainable online, while previously this was only possible for subjects in possession of a pilot's license.

At the same time, the evolution of technologies means that flying devices are equipped with increasingly refined hardware, that they are increasingly stable in flight and that their autonomy times have tripled compared to just three years ago, with a relatively limited expense.

It is also the improvement in performance and the reduction of costs that make drones ideal for a wide range of industrial applications. From the shipment of goods to the delivery of medicines, from the control and mapping of land and crops in the agricultural sector to the protection of the historical-artistic heritage, from construction to the maritime or health sector. Not to mention all those supervision, surveillance and monitoring activities whose performance in critical conditions could endanger any human operators: even in these cases, the use of drones proves to be the best possible alternative.

The first drone models did not contemplate commercial uses but, thanks to the implementation of specific hardware and software solutions, in a short time the manufacturers of these devices - companies such as Airware, Kespry, DroneDeploy, Skycatch and Propeller or DJI - were able to grasp the opportunity and catch up with the needs of the market.

Their use is increasing for civil applications, for example in fire emergency prevention and intervention operations, for non-military security uses, for oil pipeline surveillance, for remote sensing and research purposes and, more generally, in all cases in which such systems can allow the execution of so-called "dull, dirty and dangerous" missions often with lower costs than traditional air vehicles.

In recent years, technologies related to the development of UAV systems have experienced a rapid surge. In particular, the technological development in the field of sensors, allows UAVs to be equipped with multiple loads, in the visible spectrum (compact or professional digital cameras), infrared (thermal cameras), multi-spectral cameras up to more advanced sensors such as for example Lidar sensors or for air quality monitoring.

However, it is extremely important to remember that the use of UAVs in the civil field is not a mere technological issue but must always be subordinated to the regulations in the country in which one intends to operate.

The United States in 2011 began a collaboration with Mexico to stem the phenomenon of illegal immigration and drug trafficking across their border. The US military began using its remotely piloted aircraft in the skies of the neighboring country following the killing of immigration agent Jaime Zapata, who was shot dead by gunmen in northern Mexico on February 15, 2011.

UAVs are used to report the movements and the numerical strength of drug traffickers, information that is immediately communicated to the agents in the area. They fly 18,000 meters high, practically invisible from the ground, and in a single day they can meticulously control an area of about 100,000 square kilometers.

For several years, numerous companies such as Google and Facebook have been using drones to reduce the digital divide of the planet, that is, to increase the coverage of the Internet in the world. Drones, most of the time equipped with solar panels, have an almost unlimited flight range and over the years will offer connectivity in disadvantaged countries, reaching almost 2.8 billion people.

UAVs can also be used to monitor electricity production plants, or more generally industrial plants, over time, using sensors (thermographic cameras, multispectral cameras, etc.).

Remote sensing is the technical-scientific discipline or applied science with diagnostic-investigative purposes that allows qualitative and quantitative information to be obtained on the environment and on objects placed at a distance from a sensor by means of measurements of (emitted, reflected or transmitted) electromagnetic radiation that interacts with the physical surfaces of interest. By virtue of the ability to fly even at very low altitudes and to have small but good quality sensors, the UAVs belonging in particular to the mini category can be used for applications related to remote sensing such as the creation of vigor maps of agricultural crops and monitoring of the state of health of the vegetation, the creation of land cover and use maps, for the analysis and support in the steps immediately following natural disasters or for the monitoring and mapping of thermal losses of private and public buildings (houses, warehouses, industrial plants) in a period, like the present one, in which there is much talk of sustainable development and loss of land to be allocated to green areas.

Photogrammetry is a measurement technique that allows you to acquire metric data of an object (shape and position) through the acquisition and analysis of a pair of stereometric frames. With the advent of small digital cameras (compact or reflex), but which can guarantee a high quality standard in relation to the image produced, photogrammetry can be compared to UAVs and their use for the creation of digital terrain models (DTM), orthophoto production and, at the same time, for the architectural survey of infrastructures and buildings for the creation of 3D models.

UAVs have been combined directly with environmental monitoring of areas severely affected by earthquakes and floods. An example are the US UAVs Global Hawk that flew over the Fukushima Dai-ichi Nuclear Power Plant, in Japan, entering the prohibited area, in order to monitor the reactors after the explosions caused by the 2011 To̅hoku earthquake, also taking photos with the infrared sensors. The high radioactivity made it impossible for humans to approach.

UAVs can be used for wild animal monitoring and periodic numerical control for those species with a high reproduction rate that could be a problem both for the biodiversity of the environment in which they live and for the economic damage caused to the agricultural and animal husbandry productions present in the area.

UAVs can play an important role in search and rescue operations by allowing rapid reconnaissance, particularly following the occurrence of emergency situations.

UAVs in combination with the most recent and light digital video-cameras, including consumer and not only professional cameras, are becoming increasingly competitive for all those "aerial" shooting needs that until now have been almost the exclusive prerogative of complicated and expensive instruments such as the dolly or even the actual helicopter.

The regulatory landscape inherent to the matter is heterogeneous and is made up of international, community and national legislation. The relationship between these sources is of a hierarchical type, therefore what is required by a lower normative source succumbs in the presence of normative provisions of a higher source.

The ICAO recognizes many categories of manned or unmanned aircraft, giving all of them the status of "aircraft". Even a UAV is therefore an aircraft and the regulatory concepts do not undergo alterations in principle regarding the vehicle, the pilot and the operator (the same responsibilities and certifications apply, such as registration certificate, airworthiness certificate, pilot license, operator license). In particular, there is a general applicable regulatory framework, however a set of appropriate implementing rules is being defined. UAVs weighing less than 150kg are the responsibility of the individual national aeronautical authorities, the ENAC in Italy, as established in the European regulations.

With regard to the use of UAVs in airports, since episodes have occurred over time that have caused considerable inconvenience or even the blocking of airport activities, such use has been prohibited.

Over time operational safety devices have been invented for this purpose. An example is the patent ES2707350A1. The invention of the neutralization device (remotely piloted aircraft) is aimed at providing the neutralization of UAV aircraft (threat) by means of an entrapment, collection and immobilization device connected to the belly of another UAV (neutralizer) for release in a predetermined position. The main object of the invention is to trap the rotors of the VUAs to be neutralized using synthetic/natural fibers without exceeding their elastic limit and holding the trapped drone to avoid damage to third parties. A preferred version of the invention comprises composite materials, mainly carbon fiber and Kevlar^{®} 49.

However, these devices lack the ability to manage emergency cases and safety checks and are not 100% operational in airport facilities and thus unable to guarantee 360° safety thereof.

There does not seem to exist any patent that effectively solves the above drawbacks, therefore, the object of the present patent for industrial invention is to create a system and device associated with it for monitoring the progress of the activities of an airport, locating and monitoring large aircraft fleets, identifying security threats through the use of advanced hardware and software tools capable of making significant improvements in the internal control and management process of airport facilities.

### Description of the invention

According to the present invention, a new security and monitoring system for airport facilities and an aircraft device with remote pilot associated with it are provided, for monitoring the progress of activities and locating security threats.

The aforementioned system is installed in an airport facility, after joining the system itself, and connected to a monitoring center via hardware and a wireless antenna, installed inside.

This monitoring center constantly analyzes the safety performance of the airport facility, collects and subsequently organizes all the data transmitted via GPS by the aforementioned aircraft device with remote pilot; such information is inherent to the position, speed, stops, displacements, the status of connected sensors and accessories, movement, engineering and engine parameters taken from the on-board electronics of the aircraft device with remote pilot. The security and monitoring system in question is structured as follows:
- at least a maneuvering area is divided into three safety zones,
- each of them includes a special perimeter fence, perimeter security cameras and sensors and a geo-localization device,
- the aforesaid maneuvering area in turn comprises a plurality of landing and stop platforms, installed at a distance from the holding points of the runways, take-off runways and taxiing lanes;
- at least an aircraft device with remote pilot is provided with at least a recognition cell,
- at least a central monitoring controller is programmed for remote piloting of the aforementioned aircraft device.

Furthermore, the aforementioned perimeter fences, video cameras and safety sensors are connected to an anti-intrusion section of the system in question in order to send reports and/or alarms of anomalies, dangers of tampering with the fences or intrusions in the safety zones. The aforementioned system automatically sends to the aircraft device with remote pilot an automatic intervention input in one of the geo-localized safety zones that has sent a signal and/or an alarm.

At this point, the aircraft device with remote pilot recognizes potential intrusions, hooks people and objects into its field of vision via the aforementioned first thermal camera and follows them, instantly transmitting information to the monitoring station.

When the charge of the integrated battery is exhausted, the aircraft device with remote pilot is recharged through the landing and charging platforms. In this case, each of the aforementioned landing and stop platforms includes at least a concrete base provided with wireless charging area that emits electricity, by virtue of the power supply of at least three photovoltaic panels: these platforms allow the landing of aircraft devices and charging when parked. Thanks to a GPS package, installed inside the concrete base, the landing maneuvers of the aircraft device with remote pilot are facilitated, as long as a user selects the GPS position of a platform and the device will also proceed automatically to landing at the designated point.

The recharging of the battery integrated in the aircraft device with remote pilot takes place by means of at least a telescopic trolley, installed below it, which, upon contact with the aforementioned wireless charging platform, will start recharging by virtue of the presence of said photovoltaic panels.

Each platform is preferably made in yellow and with the letter H, in black, to facilitate remote landing operations for each user, even in adverse weather conditions and poor visibility.

Each of the aircraft devices with remote pilot comprises at least a central frame comprising a hardware and an aforementioned recognition cell: this, being previously registered in the system in question, is scanned by the system in order to carry out the recognition of the aforementioned device.

Above and below the frame are installed respectively:
- a first compact infrared thermal camera mounted on an arm capable of rotating 360° on its axis;
- at least a second multispectral 360° camera, which captures night images.

The aforesaid central frame is preferably orange, yellow, yellow with black lines and/or any other shade registered in the internal system of each airport facility, making the aircraft device with remote pilot immediately recognizable by the monitoring station.

A GPRS package is integrated inside the frame, which evaluates the traffic status and the regularity parameters of incoming and outgoing traffic and detects the status of air traffic in real time.

Installed laterally to the aforementioned frame, then, there are two right wings and two left wings, each of which includes at least two propellers: these allow a vertical flight precision of about 0.01m with visual positioning and of about 0.5 m with GPS positioning and a horizontal flight precision of about 0.1m with visual positioning and of about 1.5m with GPS positioning and of preferably flying up to 10,000m of altitude by self-managing the safety distance due to the aforesaid hardware.

Said central monitoring controller advantageously comprises a screen for displaying messages, notifications, maps and a dash-board section containing the main performance indicators and settings such as brightness, color and any other functionality connected to the aircraft device with remote pilot.

Optionally and advantageously, each operator of the monitoring center who is enabled to drive through the central monitoring controller is provided with:
- a Bluetooth earpiece, connected to said device activable by means of quick buttons or by means of voice commands;
- a microphone, integrated within said Bluetooth earpiece, adapted to send voice commands to said device.

One of the advantages of the system in question is that of including, in a further version, in the central monitoring controller, a plurality of sections, which can be activated via touch-screen inputs programmed with short-cuts; among them: a control panel section, a route detail section, a safety section, an intervention history section, a maintenance management section, an identification section, a programming interface section and an alarm section accurately described in the detailed description and in the claims.

In a further advantageous and technological version, the aforementioned frame comprises at least a photodetector sensor and a remote sensing sensor, with diagnostic-investigative functions, adapted to obtain qualitative and quantitative information on the environment and on the objects placed remotely by means of measurements of emitter, reflected or transmitted electromagnetic radiation, which interacts with the physical surfaces of interest.

A further advantage of the aircraft device in question is that of comprising, in a possible version, a recognition, detection and tracking system for identifying scheduled aircraft units approaching, nearby, during landing and during take-off.

It can possibly be recharged by means of a telescopic arm, reversibly extractable, adapted to lower itself upon landing on the landing platform and to close again upon take-off.

Finally, the aircraft device with remote pilot, in a further version, is connected to an application to be installed on latest generation cellular devices that allows:
- interaction and communication between internal staff with external users;
- support and management of activities;
- the planning of interventions, following the progress of each activity that can be connected to the aircraft device with remote pilot.

The aforesaid photovoltaic panels are optionally and advantageously antireflection, frangible, connected to a storage battery and to an electrical network.

Furthermore, the system in question is suitable for use in the civil, industrial or public safety sectors.

The advantages offered by the present invention are clear in the light of the above description and will be even clearer from the accompanying figures and the related detailed description.

### Description of the figures

The invention will hereinafter be described in at least a preferred embodiment thereof by way of non-limiting example with the aid of the accompanying figures, in which:

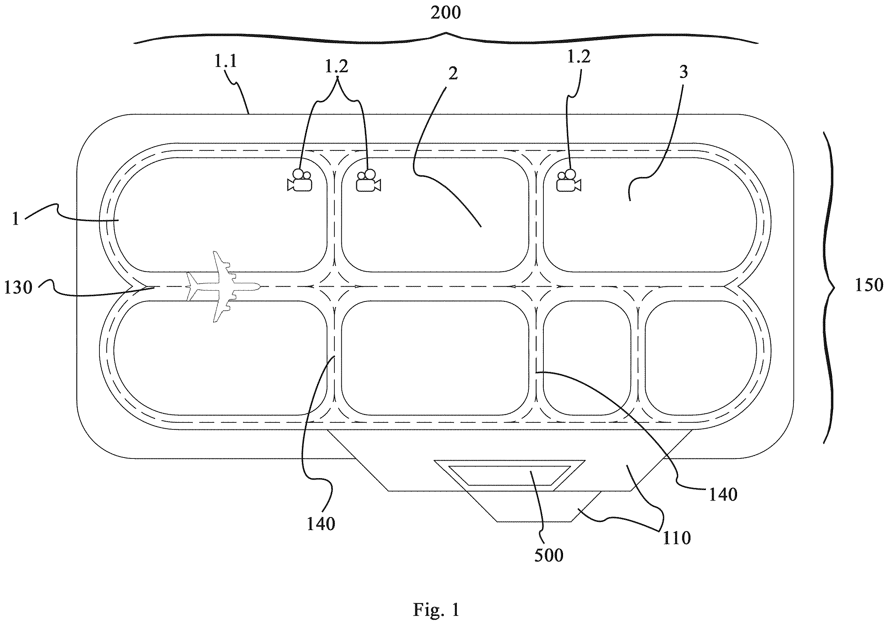

- FIGURE 1 shows the components of the system 100 in use in an airport 200 provided with a monitoring station 500 and a maneuvering area 150 divided into at least three sections 1, 2 and 3. Each maneuvering area 150 comprising a plurality of landing and stop platforms 50 of the aircraft device 10, a take-off runway 130, taxiing lanes 140 and runway holding positions 110. Each zone 1, 2, 3 is provided with fence 1.1, cameras and safety sensors 1.2.

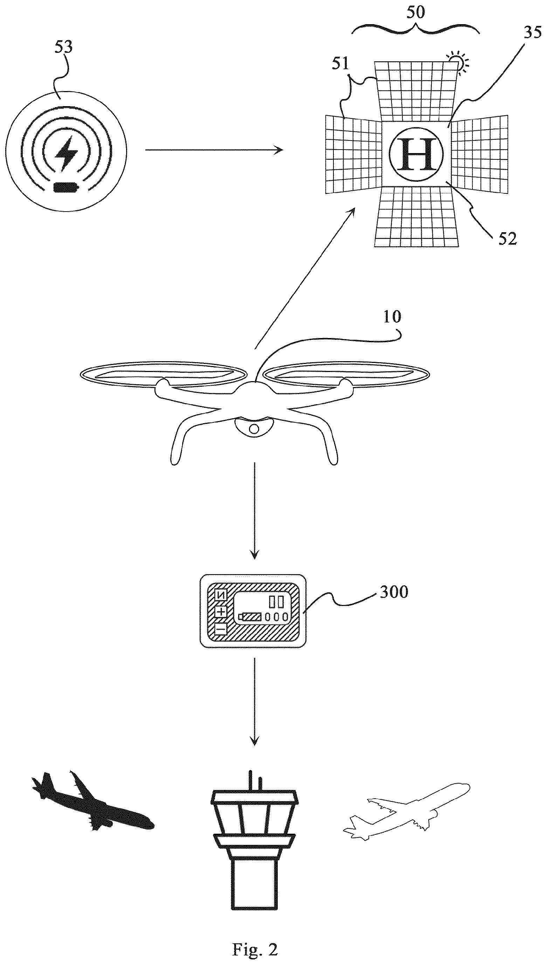

- FIGURE 2 shows a diagram of the interrelationships of the system 100 in question. Device 10 managed remotely by a central monitoring controller 300 installed in a monitoring station 500. The aforementioned device 10, once the intervention operations have been completed, returns to a landing and stop platform 50 to carry out a recharge. It should be noted that the landing and stop platform 50 comprises at least a concrete base 52 provided with a wireless charging area 53 which emits electric current and at least three photovoltaic panels 51 for recharging the aircraft devices 10 during the stop step.

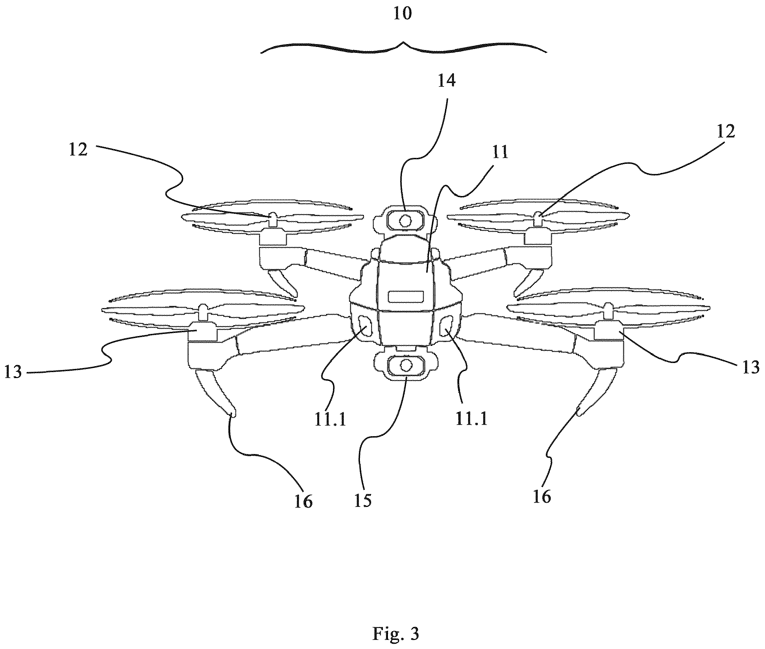

- FIGURE 3 shows the components of the aircraft device 10 associated with the system 100 in question and comprising: a frame 11 on which are installed: recognition cell 11.1 and a first and a second video camera 14, 15. On the other hand, two right wings and two left wings 12 are connected to the frame, comprising respectively at least two right and at least two left propellers 13. Below the aforesaid frame, a telescopic trolley 16 is installed that is suitable for recharging the device 10.

### Detailed description of the invention

The present invention will now be described purely by way of non-limiting or binding example with the aid of the figures, which illustrate some embodiments relative to the present inventive concept.

With reference to Fig. 1 shows all the technological components of the safety and monitoring system 100 of airports 200, for monitoring the progress of activities and the localization of security threats, by means of at least an aircraft device with remote pilot 10, shown in Fig. 3. The aforementioned system can be installed in any airport 200, increasing the efficiency of the internal process by recording data in a monitoring center 500 which constantly analyzes the safety performance of the entire airport 200.

The system is also programmed for use in the civil, industrial or public safety sectors.

As shown in Fig. 1 and 2, the structure 200 comprises a maneuvering area 150 divided into at least three safety zones 1, 2, 3 each of which comprising at least a landing and stop platform 50, preferably yellow in color and provided with letter H, black, to facilitate remote landing operations for each user, even in adverse weather conditions. It is connected to the monitoring center 500 by means of a wireless network and/or by means of a sim.

Each of the three safety zones 1, 2, 3 further includes a special fence 1.1, perimeter security cameras and sensors 1.2 and a geo-localization device. The aforementioned perimeter fences 1.1, cameras and safety sensors 1.2 are connected to an anti-intrusion section of the system 100 in order to send reports and/or alarms of anomalies, dangers of tampering or intrusions in the safety zones 1, 2, 3.

The aforementioned central monitoring controller 300 automatically sends to the aircraft device 10 an automatic intervention input at one of the geo-localized safety zones 1, 2, 3 upon notification and/or sending of an alarm by the same.

The aforementioned maneuvering area 150, then, includes runway holding points 110, strips 120, take-off runways 130 and taxiing lanes 140 necessary for the regular airport activities, take-off and landing of scheduled aircraft and for the management of traffic and board safely. The aforementioned aircraft device 10 is designed to detect possible intrusions, hook people and objects through at least a first compact infrared thermal camera 14, and follow them by instantly transmitting information to the monitoring station 500; it constantly collects the status of the main parameters of the maneuvering area 150 to retransmit each data detected to the central monitoring controller 300 which, in addition to managing its movement, activates, upon selection, an automatic mode.

In turn, the aforementioned monitoring center 500 collects and organizes all the data transmitted via GPS by the aircraft device with remote pilot 10 such as position, speed, displacement, stops, movement, status of sensors and connected accessories, engineering and engine parameters taken from the electronics. onboard.

The system 100 in question comprises a plurality of aircraft devices 10, each of which provided with at least a central frame 11, preferably in orange, yellow, yellow with black lines and/or any other registered shade, comprising hardware and a recognition cell 11.1 registered internally to the system 100 to allow the identification of the device 10 by the system 100. An integrated GPRS package is included inside the frame 11, adapted to detect the state of air traffic in real time, assess the state of the road network and the regularity parameters of the incoming and outgoing traffic.

The aforesaid frame 11 further comprises at least a photodetector sensor and a remote sensing sensor, with diagnostic-investigative functions, which obtain qualitative and quantitative information on the environment and on the objects placed remotely by means of measurements of emitter, reflected or transmitted electromagnetic radiation, which interacts with the physical surfaces of interest.

At least two right wings and two left wings 12 respectively comprising at least two right propellers and two left propellers 13 are installed at the sides of the aforesaid frame 11: they ensure a vertical flight precision of about 0.01m with visual positioning and of about 0.5m with GPS positioning and a horizontal flight precision of about 0.1m with visual positioning and of about 1.5m with GPS positioning and of preferably flying up to 10,000m of altitude by self-managing the safety distance due to the aforesaid hardware. The latter includes a recognition, detection and tracking system to identify aircraft 400 approaching, nearby, landing and taking off.

An aforesaid telescopic trolley 16 and/or possibly a telescopic arm, reversibly extractable, are installed below the device 10 for landing and recharging it: they are designed to lower upon landing on a landing platform 50 and close again at the time of take-off.

Each of these aircraft devices 10 comprises at least a second 360° multispectral camera 15 for capturing night images.

As shown in Fig. 3, each of the landing and stop platforms 50 comprises a central concrete base 52, provided with a wireless recharge area 53 which, upon landing of the aircraft device with remote pilot 10, coming into contact with one of its trolleys 16, emits electric current by recharging the battery of the aforementioned device 10. At least three photovoltaic panels 51, anti-reflective, frangible, connected to a storage battery and to an electrical network, are installed laterally to the concrete base 52 and generate the energy necessary for the wireless recharge area 53.

A GPS package is integrated into the concrete base 52 in order to increase the landing precision of each aircraft device 10: the GPS package is also powered by the aforementioned photovoltaic panels 51.

The aforementioned central monitoring controller 300 includes at least a screen 30 for displaying messages, notifications and maps, which automatically manages a dashboard section 30.1 consisting of a summary dashboard with the main performance indicators and settings relating to brightness, color and any other functionality connected to the aircraft device 10. This screen 30 shows all information received by means of the GPRS packet and by means of the remote sensing sensor installed on said device 10.

The information contained within the controller 300 also concerns the perimeter and surfaces of the maneuvering area 150 and surrounding it, the location points of the landing platforms 50, indicating the geographical points.

The aforementioned controller 300 sends to the device 10 a landing and/or take-off command, at a specific and preset point of the landing platform 50 by means of a touch-screen input and/or by means of a voice command.

In addition, a plurality of management sections comprising various functions are included in the aforementioned controller 300.

A "control panel" section provides data relating to the location of the aircraft device 10, the distance traveled, the altitude, the state of charge in flight and the state of charge when parked and a "route detail" section shows the list of scheduled activities indicating the relative priorities previously assigned, provides the progress of the activities and allows the acquisition of images and videos received by the device 10 as well as sending inputs, documents and additional notes to it.

A "safety" section provides an automatic intervention mode of the aircraft device 10 in the event of reports, while the "intervention history" manages an archive of emergency interventions and a summary of the main information on the number of kilometers traveled, driving hours, consumption, highlighting places and times of rest and movement.

In addition, there is a "maintenance management" section and an "identification" section to recognize by means of biometric recognition systems, through RFID technology or through credentials, a user designated as the driver of the aircraft device 10 and ensure that it is the qualified pilot to carry out these activities.

Finally, an alarm section allows local warnings, service warnings, technical warnings, driving warnings and any other parameter adapted to be signaled by means of an alarm and an "application programming interface" section facilitates technology updates of the management software. The entire system is connected to an application to be installed on latest generation cellular devices adapted to allow interaction and communication with external staff, support the management of activities, plan interventions, follow the progress of any other activity that can be connected to the aforementioned device 10 improving the communication between several users allowing to quickly interact with the central monitoring controller 300, send requests and feedback regarding the activity of said aircraft devices 10.

Each operator of the monitoring station 500, who is enabled to use the central monitoring controller 300, is provided with a Bluetooth headset and a microphone, integrated inside the Bluetooth headset, to send voice commands to the device 10.

## Claims

1. Safety and monitoring system (100) for airports (200) adapted to increase the efficiency of the internal process through the data recording allowed by at least a hardware and a wireless antenna, installed inside a monitoring station (500); said monitoring station (500) being adapted to constantly carry out analysis on the progression in safe conditions of a maneuvering area (150); said monitoring station (500) being adapted to collect and organize all the data transmitted via GPS by at least an aircraft device with remote pilot (10) included in said system (100), such as position, speed, displacement, stops, movement, state of sensors and connected accessories, engineering and motor parameters drawn from the on-board electronics; said safety and monitoring system (100) being **characterized in that** it comprises:
- a maneuvering area (150) comprising a plurality of landing and stop platforms (50), installed above and on the level of the turf surrounding said maneuvering area (150); said maneuvering area (150) comprising runway holding positions (110), take-off runways (130) and taxiing lanes (140);
- a plurality of said landing and stop platforms (50), each of which comprising at least a concrete base (52) provided with wireless search area (53) adapted to emit electric current and at least three photovoltaic panels (51) adapted to recharge said aircraft devices (10) when stopped and a GPS packet adapted to increase the landing precision of each aircraft device (10); said photovoltaic panels (51) being adapted to power supply the GPS point, installed inside each platform (50); each platform (50) preferably having yellow color and provided with letter H, black color, adapted to facilitate the remote landing operations for each user, also in adverse weather conditions; each landing and stop platform (50) being connected with said monitoring station (500) by means of said wireless network and/or by means of SIM;
- at least an aircraft device with remote pilot (10) provided with at least a recognition cell (11.1) registered inside said system (100) and adapted to be identified by said system (100); at least a telescopic trolley (16) installed on each aircraft device (10) and adapted to charge, by means of said photovoltaic panels (51), the battery integrated in said device (10); said recharging being activatable by means of the simple contact of said trolley (16) with said wireless recharge area (53); each of said devices (10) comprising at least a first infrared thermal video camera (14), compact, installed on said aircraft device (10) above an arm adapted to carry out a rotation of 360° on itself and at least a second 360° multispectral video camera (15), adapted to capture nocturnal images;
- - at least a central monitoring controller (300) comprising at least a screen (30) for displaying messages, notifications and maps, adapted to automatically manage a dash-board section (30.1): a summary instrument panel containing the main performance indicators and the settings such as brightness, color and any other function connected to said aircraft device (10); said screen (30) being adapted to show each piece of information, received by means of a GPRS packet and by means of a remote sensing sensor installed on said device (10); said information being relative to said aircraft device (10), to the perimeter and to the surfaces of said maneuvering area (150) and surrounding the same, with a high cartographic detail, according to the parameters present in the cartographic license in use; said screen being adapted to show each of said landing platforms (50), signaling the geographic points of their location; said controller (300) being adapted to send a landing and/or take-off command, in a specific and preset point of the landing platform (50) by means of input touch-screen and/or by means of voice command; said controller (300) comprising a plurality of sections, adapted to be activated by means of input touch-screen programmed with short-cut paths intended to select the necessary operations through a single click;
said maneuvering area (150) being divided into at least three safety zones (1, 2, 3), each of which comprising a suitable fence (1.1), video cameras and perimeter safety sensors (1.2), a geolocation device; said perimeter fences, video cameras and safety sensors (1.1, 1.2) being connected to an anti-intrusion section of said system (100) so as to send signals and/or alarms of irregularities, risks of disruptions or intrusions in said safety zones (1, 2, 3); said system (100) being adapted to automatically send, to said aircraft device (10), an automatic intervention input at one of said geolocated safety zones (1, 2, 3) which had sent a signal and/or an alarm; said aircraft device (10) being adapted to identify possible intrusions, catching people and objects in the visible field thereof by means of said first thermal video camera (14) and follow them by instantaneously transmitting information to said monitoring station (500).

2. Safety and monitoring system for airports (200), according to the preceding claim 1, being **characterized in that** it is adapted to carry out analysis on the numerical adjustment of the line aircraft in order to manage the entering and exiting traffic, evaluating the regularity and distribution of the proportional loads, on each take-off and landing runway (130).

3. Safety and monitoring system for airports (200), according to any one of the preceding claims 1 or 2, **characterized in that** said photovoltaic panels (51) contained in said landing and stop platforms (50) are: antiglare, shatterproof, connected to a storage battery and to a power grid.

4. Safety and monitoring system for airports (200), according to any one of the preceding claims, being **characterized in that** each operator of said monitoring station (500), enabled to use said central monitoring controller (300), is provided with the following:
- a Bluetooth earpiece, connected to said device (10) activable by means of quick buttons or by means of voice commands;
- a microphone, integrated within said Bluetooth earpiece, adapted to send voice commands to said device (10).

5. Safety and monitoring system for airports (200), according to any one of the preceding claims, being **characterized in that** said central monitoring controller (300) comprises a plurality of sections including:
- a "control panel" section adapted to provide the data relative to the location of said aircraft device (10), to the distance traveled, to the altitude, to the charge state during flight and to the recharge state when stopped; said control panel being adapted to show the detail of the activities to be performed to any user;
- a "path detail" section adapted to show the list of the planned activities, indicating the relative previously-assigned priorities; said path detail section being adapted to allow a user to provide the state of advancement of the activities, to acquire images and videos received by said device (10) and to send inputs, documents and additional notes to said device (10);
- a "safety" section adapted to select an automatic intervention mode of said aircraft device (10) in case of signaling;
- an "intervention historical record" section adapted to provide an archive of the emergency interventions and a summary of the main information pieces regarding the number of kilometers traveled, the flying times, the consumptions, highlighting places and times of stoppage and movement; said function allowing a verification of the recorded data and a retransmission via GPRS of the same to said central monitoring controller (300);
- a "maintenance management" section adapted to manage the maintenance interventions by programming each deadline relative to an ordinary maintenance of each landing and stop platform (50) and of each device (10);
- an "identification" section adapted to identify a pilot and to ascertain that it is in fact the pilot qualified to fly and carry out such activities; said identification operating by means of biometric recognition systems, by means of RFID technology or by means of credentials.

6. Safety and monitoring system for airports (200), according to any one of the preceding claims, being **characterized in that** it is provided with:
- an alarms section adapted to allow setting different types of alerts on the desired parameters comprising warnings regarding the territory, service warnings, technical warnings, flying warnings and any other parameter adapted to be signaled by means of an alarm; said section alarms being adapted to allow receiving notifications by means of said wireless antenna and/or said SIM, on a navigation platform and to a plurality of registered e-mail addresses;
- an "applications programming interface" section adapted to facilitate the integration of said device (10) with a plurality of external management software systems and allow extracting the interesting data, coming from the manufacturer on-board data communication, so as to implement integrations with the main hardware systems.

7. Aircraft device (10) with remote pilot, provided with a first and a second integrated video camera (14, 15) and with one said telescopic trolley (16) adapted for recharging, based on said system (100), according to the preceding claims from 1 to 6 and **characterized in that** it comprises:
- at least a central frame (11) comprising one said hardware and one said recognition cell (11.1) registered in each system (100) and adapted to be scanned by each system (100) installed in the adhering airport structures (200); said central frame (11) having orange, yellow or yellow with black lines color and/or any other tonality registered in each internal system (100) of each adhering airport structure (200), rendering said aircraft device with remote pilot (10) immediately recognizable by the internal processors; said frame (11) comprising an integrated GPRS packet, adapted to detect the state of the aircraft traffic in real time, evaluate the traffic circulation state and the entering and exiting traffic regularity parameters;
- at least two right wings and two left wings (12) respectively comprising at least two right propellers and two left propellers (13) adapted to ensure a vertical flight precision of about 0.01 m with visual positioning and of about 0.5 m with GPS positioning and a horizontal flight precision of about 0.1 m with visual positioning and of about 1.5 with GPS positioning and of preferably flying up to 10000 meters of altitude by self-managing the safety distance due to said hardware;
said device (10) being adapted to constantly collect the state of the main parameters of said maneuvering area (150) in order to retransmit each detected data piece to said central monitoring controller (300); said device being adapted to be activated by means of at least a central monitoring controller (300) or automatically upon selection of an automatic mode by a user.

8. Aircraft device (10) with remote pilot adapted for use in airport structures (200), according to the preceding claim 7, **characterized in that** said frame (11) comprises at least a photodetector sensor and a remote sensing sensor, with diagnostic-investigative functions, adapted to obtain qualitative and quantitative information on the environment and on the objects placed remotely by means of measurements of emitter, reflected or transmitted electromagnetic radiation, which interacts with the physical surfaces of interest.

9. Aircraft device (10) with remote pilot adapted for use in airport structures (200), according to the preceding claim 7 or 8, **characterized in that** said hardware comprises a recognition, detection and tracking system adapted to identify line aircraft units that are approaching, in the vicinity, in the landing or take-off phase.

10. Aircraft device (10) with remote pilot adapted for use in airport structures (200), according to any one of the preceding claims from 7 to 9, **being characterized in that** it is rechargeable by means of a reversibly extractable telescopic arm, adapted to be lowered at the time of landing on said landing platform (50) and to be reclosed at the time of take-off.

11. Aircraft device (10) with remote pilot adapted for use in airport structures (200), according to any one of the preceding claims from 7 onward, **characterized in that** it is connected to an application to be installed on latest generation cellular devices adapted to allow the interaction and the communication with the external personnel, support the management of the activities, plan interventions, follow the advancement of any other activity connectable to said device (10); said application being adapted to improve the communication between multiple users by allowing quick interaction with said central monitoring controller (300), sending requests and feedback regarding the activity of said aircraft devices (10).

12. Use of a safety and monitoring system according to any one of the preceding claims from 1 to 6, **characterized in that** it is also adapted for use in civil field, industrial field or for public safety.
